# EUROPEAN PATENT APPLICATION

(11) **EP 4 632 889 A1**
(43) Date of publication of application: **15.10.2025**
(21) Application number: 24840101.0
(22) Date of filing: 10.07.2024
(51) Int. Cl.: H01M 50/131, H01M 50/126, H01M 50/133, H01M 50/119, H01M 50/121, H01M 50/105, B32B 27/34, B32B 27/36, B32B 15/088, B32B 15/18

(54) **POUCH FILM LAMINATE AND POUCH-TYPE SECONDARY BATTERY**

(30) Priority: 11.07.2023 KR 20230090095; 26.06.2024 KR 20240084073
(71) Applicant: LG Energy Solution, Ltd., Seoul 07335 (KR)
(72) Inventor: SONG, Dae Woong, Daejeon 34122 (KR); HWANG, Soo Ji, Daejeon 34122 (KR); YU, Hyung Kyun, Daejeon 34122 (KR); KANG, Min Hyeong, Daejeon 34122 (KR); SHIN, Ji Hyun, Daejeon 34122 (KR); KIM, Gi Woung, Daejeon 34122 (KR)
(74) Representative: Plasseraud IP
(86) International application number: PCT/KR2024/009891
(87) International publication number: WO 2025/014291

(57) **Abstract**

The present invention relates to a pouch film laminate in which a base material layer; a gas barrier layer; and a sealant layer are sequentially laminated, wherein the base material layer includes a polyamide-based film, and, in a melting peak of the polyamide-based film which is obtained by differential scanning calorimetry (DSC), a ratio (H/A) of a height (W/g) (H) of the peak to a melting enthalpy (W·sec/g) (A) of the polyamide-based film is 0.03 sec⁻¹ or more.

## Description

### TECHNICAL FIELD

### Cross-reference to Related Applications

This application claims priority from Korean Patent Application Nos.10-2023-0090095, filed on July 11, 2023, and 10-2024-0084073, filed on June 26, 2024, the disclosures of which are incorporated by reference herein.

### Technical Field

The present invention relates to a pouch film laminate and a pouch type secondary battery, and more particularly, to a pouch film laminate and a pouch type secondary battery in which pouch appearance defects, which may occur at a high sealing temperature, are improved.

### BACKGROUND ART

In general, types of secondary batteries include a nickel cadmium battery, a nickel hydride battery, a lithium ion battery, and a lithium ion polymer battery. These secondary batteries have been used not only in small products such as digital cameras, P-DVDs, MP3Ps, mobile phones, PDAs, portable game devices, power tools, and E-bikes, but also in large products requiring high output, such as electric vehicles and hybrid vehicles, and a power storage device and a power storage device for backup which store surplus generated power or renewable energy.

To prepare these secondary batteries, first, electrode active material slurries are applied onto a positive electrode collector and a negative electrode collector to prepare a positive electrode and a negative electrode, respectively, and the positive electrode and the negative electrode are stacked on both sides of a separator to form an electrode assembly having a predetermined shape. Then, the electrode assembly is put in a battery case, and the battery case is sealed after an electrolyte is injected.

The secondary batteries are classified into a pouch type, a can type, and the like, according to a material of a case for accommodating the electrode assembly. The pouch type secondary battery accommodates the electrode assembly in a pouch formed of a flexible polymer material. The can type secondary battery accommodates the electrode assembly in a case formed of a material such as metal or plastic.

The pouch, which is a case of the pouch type secondary battery, is prepared by press working of a flexible pouch film laminate to form a cup portion. Once the cup portion is formed, a secondary battery may be prepared by accommodating the electrode assembly in an inner accommodation space of the cup portion and sealing a sealing portion.

In general, the pouch film laminate is composed of a plurality of layers in which a polymer film, such as polyethylene terephthalate, is laminated on one surface of a metal gas barrier layer and a sealant layer is laminated on the other surface thereof.

Conventionally, if a thickness of the gas barrier layer was increased to improve formability of the pouch for a secondary battery, there was a problem in that heat was slowly transferred to the sealant layer when sealing the pouch sealing portion. As a result, since sealing strength of the pouch was decreased as melting of the sealant layer slowed down, more heat had to be applied to the sealing portion by increasing sealing temperature in order to secure sufficient sealing strength. However, in a case in which the sealing temperature is increased to 220°C or higher, defects in appearance of the pouch occur due to melting of a base material layer.

Thus, there is a need to develop a pouch film laminate in which the pouch appearance defects are improved by suppressing deformation of the base material layer even if sealing is performed by increasing the sealing temperature to 220°C or higher.

### DISCLOSURE OF THE INVENTION

### TECHNICAL PROBLEM

An aspect of the present invention provides a pouch film laminate and a pouch type secondary battery which may secure sealing properties and productivity and may suppress deformation in appearance of a pouch even when sealing is performed at a temperature of 220°C or higher by including a polyamide-based film having a narrow melting peak obtained by a differential scanning calorimetry in a base material layer.

### TECHNICAL SOLUTION

According to an embodiment, the present invention provides a pouch film laminate in which a base material layer; a gas barrier layer; and a sealant layer are sequentially laminated, wherein the base material layer includes a polyamide-based film, and, in a melting peak of the polyamide-based film which is obtained by differential scanning calorimetry (DSC), a ratio (H/A) of a height (W/g) (H) of the peak to a melting enthalpy (W·sec/g) (A) of the polyamide-based film is 0.03 sec⁻¹ or more, more preferably, 0.04 sec⁻¹ or more.

A full width at half maximum value of the melting peak of the polyamide-based film may be 5.0°C or less, preferably 4.5°C or less, and more preferably 4.0°C or less.

A lower limit of a relative water content index represented by Equation 1below of the polyamide-based film may be 11,500 ppm·g/cm², preferably 13,000 ppm·g/cm², and more preferably 14,000 ppm·g/cm², and an upper limit thereof may be 21,500 ppm·g/cm², preferably 21,000 ppm·g/cm², and more preferably 20,000 ppm·g/cm². Relative water content index (ppm·g/cm2) = [(pouch water content) × (pouch density)] × [(second base material layer thickness)/(total thickness of the pouch film laminate)]

The polyamide-based film may include at least one selected from the group consisting of Nylon 6, Nylon 6, 6, Nylon MXD5 (polyxylylene adipamide), Nylon 4, Nylon 4, 6, and Nylon 4,10, and may preferably include Nylon 6.

The base material layer may have a two-layer structure in which a first base material layer and a second base material layer are sequentially laminated, and the second base material layer may include the polyamide-based film.

In this case, the first base material layer may have a thickness of5 µm to 30 µm, preferably 5 µm to 25 µm, and more preferably 7 µm to 20 µm.

The second base material layer may have a thickness of5 µm to 30 µm, preferably 7 µm to 29 µm, and more preferably 10 µm to 27 µm.

The first base material layer may include a polyester-based film.

The gas barrier layer may include at least one selected from the group consisting of aluminum, copper, and stainless steel.

The gas barrier layer may have a thickness of 20 µm to 100 µm, preferably 30 µm to 90 µm, and more preferably 35 µm to 85 µm.

The sealant layer may have a thickness of 30 µm to 130 µm, preferably 40 µm to 120 µm, and more preferably 60 µm to 100 µm.

Also, a pouch type secondary battery according to another embodiment of the present invention may include a pouch type battery case prepared by forming any one of the above-described pouch film laminates, and an electrode assembly accommodated in the pouch type battery case.

### ADVANTAGEOUS EFFECTS

A pouch film laminate according to the present invention may suppress deformation of abase material layer even when sealing temperature is increased to 220°C or higher by including a polyamide-based film having a narrow melting peak in the base material layer, and, accordingly, may improve appearance defects of a pouch type secondary battery.

Also, since the pouch film laminate according to the present invention suppresses the deformation of the base material layer even when the sealing temperature is increased to 220°C or higher during sealing, a sealant layer may be melted by applying sufficient heat. Accordingly, when sealing the pouch film laminate, sealing strength may be increased and sealing time may be reduced to secure productivity.

### BRIEF DESCRIPTION OF THE DRAWINGS

FIG. 1 is a cross-sectional view illustrating a structure of a pouch film laminate according to an embodiment of the present invention.
FIG. 2 is a cross-sectional view illustrating a structure of a pouch film laminate according to another embodiment of the present invention.
FIG. 3 is an exploded assembly view of a pouch type secondary battery according to the present invention.
FIG. 4 is a graph illustrating differential scanning calorimetry (DSC) evaluation results which are evaluated according to Experimental Example 1.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

Hereinafter, the present invention will be described in more detail.

The present inventors have found that, in a case in which a base film layer of a pouch film laminate includes a polyamide-based film having a ratio (H/A) of a height (W/g) (H) of a melting peak obtained by a differential scanning calorimetry (DSC) to a melting enthalpy (W·sec/g) (A) of the melting peak of 0.03 sec⁻¹ or more, since deformation of the base film layer may be suppressed even when the pouch film is sealed at a temperature of 220°C or higher, effects of high sealing strength and reduced sealing time may be ensured, thereby leading to the completion of the present invention.

### Pouch Film Laminate

A pouch film laminate according to the present invention is a pouch film laminate in which a base material layer; a gas barrier layer; and a sealant layer are sequentially laminated, wherein the base material layer includes a polyamide-based film, and, in a melting peak of the polyamide-based film which is obtained by differential scanning calorimetry (DSC), a ratio (H/A) of a height (W/g) (H) of the peak to a melting enthalpy (W·sec/g) (A) of the polyamide-based film is 0.03 sec⁻¹ or more. Specifically, the pouch film laminate according to the present invention may be a pouch film laminate.

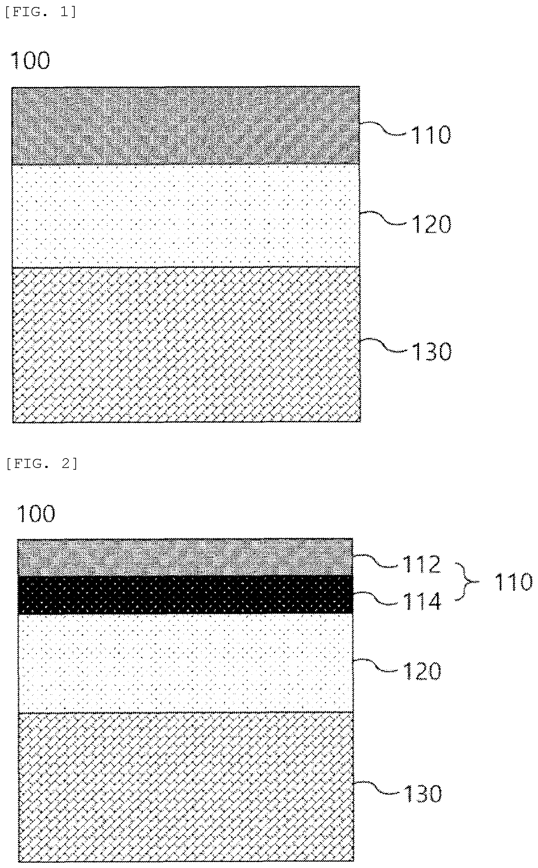

Hereinafter, the pouch film laminate according to the present invention and each layer included in the pouch film laminate will be described in detail with reference to FIG. 1.

FIG. 1 is a cross-sectional view of a pouch film laminate 100 according to the present invention.

As illustrated in FIG. 1, the pouch film laminate 100 includes a base material layer 110, a gas barrier layer 120, and a sealant layer 130. The base material layer 110, the gas barrier layer 120, and the sealant layer 130 may be sequentially laminated in the pouch film laminate 100.

### (1) Base Material Layer

According to an embodiment of the present invention, the base material layer 110 is formed as an outermost layer of the pouch film laminate 100 to protect a secondary battery from friction and collision with the outside. The base material layer 110 is formed of a polymer such that it may electrically insulate an electrode assembly from the outside.

The base material layer 110 may include a polyamide-based film. For example, the polyamide-based film may include at least one selected from the group consisting of Nylon 6, Nylon 6,6, Nylon MXD6(polyxylene adipamide), Nylon 4, Nylon 4,6, and Nylon 4,10, but is not limited thereto. Preferably, the polyamide-based film may include Nylon 6, and, in this case, there is an advantage in that formability of a pouch may be improved due to excellent elongation properties of the Nylon 6.

Differential Scanning Calorimetry (DSC) is a method for analyzing physical and chemical properties of a sample material by expressing a difference in amount of heat flowing into the sample material and a reference material as a function of temperature while heating or cooling at a specific temperature. In a melting peak of a graph obtained by differential scanning calorimetry, an area of the peak is defined as an area between a horizontal axis of the graph and the peak and has a unit of W·°C/g. In this case, a melting enthalpy (unit: W·sec/g) of the sample material may be measured by dividing the area of the peak by a heating rate (unit: °C/min) of a DSC instrument. A height (W/g) of the peak is defined as the maximum value of the melting peak, and means an amount of crystals of the sample material which melt at a temperature of the peak. Also, a full width at half maximum (°C) of the peak is defined as a width of the peak at a position that is half the height of the peak, and means a melting temperature distribution of the crystals of the sample material.

In a melting peak of the polyamide-based film which is obtained by differential scanning calorimetry (DSC), a ratio (H/A) of a height (W/g) (H) of the peak to a melting enthalpy (W·sec/g) (A) of the polyamide-based film may be 0.03 sec⁻¹ or more, more preferably, 0.04 sec⁻¹ or more.

The melting enthalpy of the polyamide-based film means an amount of crystals included in the polyamide-based film, wherein the higher the melting enthalpy is, the greater the amount of the crystals included in the polyamide-based film may be. Also, the higher the height of the melting peak of the polyamide-based film is, the greater the amount of the crystals melting at a temperature of the peak may be. Accordingly, since the present invention increases the amount of the crystals melting at the temperature of the peak by adjusting the ratio of the height of the melting peak to the melting enthalpy of the polyamide-based film to 0.03 sec⁻¹ or more, the present invention uses a polyamide-based film in which a melting initiation temperature of the polyamide-based film is adjusted to 215°C.

Specifically, in a case in which the above range is satisfied, the melting peak of the polyamide-based film, which is obtained by the differential scanning calorimetry, may have a relatively narrow and tall shape. In a case in which the melting enthalpy is the same, the higher the height of the melting peak of the polyamide-based film is, the more densely the crystals are formed. In contrast, in the case that the melting enthalpy is the same, the lower the height of the melting peak of the polyamide-based film is, the more sparsely the crystals are formed, and an amount of the crystals melting at a temperature lower than the temperature of the peak is relatively increased.

Thus, in a case in which the ratio (H/A) of the height (H) of the peak to the melting enthalpy (A) of the polyamide-based film satisfies the above range, since the crystals included in the polyamide-based film are relatively densely formed, the melting initiation temperature is increased. Accordingly, in a case in which the base material layer contains moisture above a certain level, since an amount of crystals melting when sealing is performed at a temperature of 220°C is relatively small, the deformation of the base material layer occurs less even if the moisture evaporates. As a result, since a problem of deformation of the base material layer due to bubbles may be improved, damage to a sealing portion may be prevented and durability and life characteristics of a pouch type secondary battery may be improved.

The ratio (H/A) of the height (H) of the peak to the melting enthalpy (A) of the polyamide-based film may be adjusted by cooling/heat treatment conditions and draw ratio during a preparation process of the polyamide-based film. Specifically, the polyamide-based film may be composed of crystals with a uniform size as cooling time is longer, heat treatment temperature is higher, and heat treatment time is longer when preparing the polyamide-based film. Also, in a case in which a machine direction (MD) draw ratio and a transverse direction (TD) draw ratio of the polyamide-based film have similar values, it is easy to have crystals with a uniform size. In this case, since a deviation in melting temperature of the crystals is decreased as the size of the crystals included in the polyamide-based film becomes more uniform, an amount of crystals melting at the peak temperature is relatively increased in comparison to a total amount of the crystals, and thus, the ratio (H/A) may be increased.

In the melting peak of the polyamide-based film which is obtained by differential scanning calorimetry (DSC), the ratio (H/A) of the height (W/g) (H) of the peak to the melting enthalpy (W·sec/g) (A) of the polyamide-based film and a ratio of an area of the melting peak in a specific temperature range including the melting initiation temperature to a total area of the melting peak may have an independent relationship and may have different trends. For example, a case where the ratio (H/A) of the height (W/g) (H) of the peak to the melting enthalpy (W·sec/g) (A) of the polyamide-based film is 0.03 sec⁻¹ or more, the ratio of the area of the melting peak in a range of 210°C to 220°C to the total area of the melting peak may be relatively smaller or larger than or may be the same as that of a case where the ratio (H/A) of the height (W/g) (H) of the peak to the melting enthalpy (W·sec/g) (A) of the polyamide-based film is 0.03 sec⁻¹ or less.

Even if the ratio of the area of the melting peak in a range of 210°C to 220°C to the total area of the melting peak is relatively larger, if the ratio (H/A) of the height (W/g) (H) of the peak to the melting enthalpy (W·sec/g) (A) of the polyamide-based film is 0.03 sec⁻¹ or more, deformation of the base material layer when sealing is performed at a temperature of 220°C or higher may be prevented. In contrast, even if the ratio of the area of the melting peak in a range of 210°C to 220°C to the total area of the melting peak is relatively smaller, if the ratio (H/A) of the height (W/g) (H) of the peak to the melting enthalpy (W·sec/g) (A) of the polyamide-based film is 0.03 sec⁻¹ or less, it may be difficult to prevent the deformation of the base material layer when the sealing is performed at a temperature of 220°C or higher.

Also, a full width at half maximum value of the melting peak of the polyamide-based film may be 5.0°C or less, preferably 4.5°C or less, and more preferably 4.0°C or less. In a case in which the polyamide-based film has the same melting enthalpy, the smaller the full width at half maximum value of the melting peak is, the more densely the crystals included in the polyamide-based film are formed, and accordingly, the amount of the crystals melting below the temperature of the peak is decreased. Accordingly, in a case in which the full width at half maximum value satisfies the above range, even if the base material layer contains moisture above a certain level, since the amount of the crystals melting when sealing is performed at a temperature of 220°C is relatively small, the deformation of the base material layer occurs less even if the moisture evaporates.

A lower limit of a relative water content index represented by Equation 1 below of the polyamide-based film may be 11,500 ppm·g/cm², preferably 13,000 ppm·g/cm², and more preferably 14,000 ppm·g/cm², and an upper limit thereof may be 21,500 ppm·g/cm², preferably 21,000 ppm·g/cm², and more preferably 20,000 ppm·g/cm². Relative water content index (unit: ppm·g/cm2) = [(pouch water content) × (pouch density)] × [(second base material layer thickness)/(total thickness of the pouch film laminate)]

With respect to the pouch film laminate according to the present invention, the deformation of the base material layer when the sealing is performed at a temperature of 220°C or higher may not occur even in a case where the relative water content index of the polyamide-based film is 11,500 ppm·g/cm² or more.

Specifically, in a case in which the relative water content index is less than 11,500 ppm·g/cm², there may be a problem of fracture or cracking when forming the pouch film laminate. Also, in a case in which the relative water content index is greater than 21,500 ppm·g/cm²,since toughness of the polyamide-based film is rather decreased, formability of a pouch for a secondary battery may be reduced.

Accordingly, in a case in which the lower limit of the relative water content index of the polyamide-based film is 11,500 ppm·g/cm² and the upper limit thereof is 21,500 ppm·g/cm², since toughness of the base material layer may be improved, the problem of fracture or cracking when forming the pouch film laminate may be prevented to improve the formability of the pouch for a secondary battery.

The base material layer 110 may include a polyester-based film having wear resistance and heat resistance. For example, the polyester-based film may include at least one selected from the group consisting of polyethylene terephthalate, polybutylene terephthalate, and polyethylene naphthalate, but is not limited thereto.

The base material layer 110 may have a thickness of 5 µm to 100 µm, preferably 7 µm to 70 µm, and more preferably 15 µm to 60 µm. In a case in which the thickness of the base material layer 110 satisfies the above range, since external insulation is excellent and an entire pouch is not thick, energy density to volume of the secondary battery may be excellent.

The base material layer 110 according to the present invention may have a single layer structure formed of any one material or a composite layer structure which is formed by layering two or more materials, respectively.

FIG. 2 is a cross-sectional view illustrating a structure of a pouch film laminate according to another embodiment of the present invention.

Referring to FIG. 2, in a case in which the base material layer 110 according to the present invention has a composite layer structure, it may have a two-layer structure in which a first base material layer 112 and a second base material layer 114 are sequentially laminated. An adhesive layer may be disposed between the respective layers in the composite layer structure. For example, in a case in which the base material layer 110 according to the present invention includes the adhesive layer, it may have a structure in which the first base material layer 112, a first adhesive layer (not shown), and the second base material layer 114 are sequentially laminated. Additionally, the base material layer 110 may further include a second adhesive layer (not shown) which is disposed between the second base material layer 114 and a gas barrier layer 120.

The first base material layer 112, the second base material layer 114, the first adhesive layer, and the second adhesive layer may be formed of materials with different materials and/or physical properties, respectively. An interface may exist between the respective layers of the base material layer 110 including the first base material layer 112, the second base material layer 114, the first adhesive layer, and the second adhesive layer. This means that the respective layers are different layers from each other and may be formed separately.

### 1) First Base Material Layer

The first base material layer 112 may be a layer disposed as the outermost layer of the pouch film laminate 100. In this case, the first base material layer 112 may play a role in preventing moisture penetration from the outside of the pouch.

The first base material layer 112 may include at least one selected from the group consisting of polyethylene, polypropylene, polycarbonate, polyethylene terephthalate, polyvinyl chloride, acrylic polymer, polyacrylonitrile, polyamide, cellulose, aramid, Nylon, polyester, polyparaphenylenebenzobisoxazole, polyarylate, Teflon, and glass fibers.

Preferably, the first base material layer 112 may include the above-described polyester-based film. Since specific examples of the polyester-based film are the same as those described above, a detailed description thereof is omitted.

In this case, the first base material layer may have a thickness of 5 µm to 30 µm, preferably5 µm to 25 µm, and more preferably7 µm to 20 µm. In a case in which the thickness of the first base material layer 112 satisfies the above numerical range, moisture penetration into the inside of the pouch film laminate may be effectively suppressed while insulation properties and formability of the pouch are ensured. Also, since a total thickness of the pouch film laminate is not thick, the energy density to volume of the secondary battery is reduced.

### 2) Second Base Material Layer

The second base material layer 114 may be a layer disposed between the first base material layer 112 and the gas barrier layer 120. In this case, the second base material layer 114 may play a role in improving the formability of the pouch.

The second base material layer 114 may include the above-described polyamide-based film. Since specific examples and characteristics of the polyamide-based film are the same as those described above, a detailed description thereof is omitted.

The second base material layer may have a thickness of 5 µm to 30 µm, preferably 7 µm to 29 µm, and more preferably 10 µm to 27 µm. In a case in which the thickness of the second base material layer satisfies the above range, since the second base material layer is not excessively thin, the formability of the pouch may be ensured, a decrease in the energy density to volume of the secondary battery due to an excessive increase in thickness of the pouch film laminate may be prevented, and the second base material layer may be formed to a uniform thickness.

### 3) First Adhesive Layer

The first adhesive layer (not shown) may be a layer disposed between the first base material layer 112 and the second base material layer 114.In this case, the first adhesive layer may act to adhere the first base material layer 112 and the second base material layer 114 to each other.

The first adhesive layer may include at least one selected from the group consisting of a urethane-based polymer, an epoxy-based polymer, and an acrylic-based polymer, but is not limited thereto. Preferably, the first adhesive layer may include a urethane-based polymer, and, in this case, the first adhesive layer may be easily formed and cut while it may adhere to the first base material layer 112 and the second base material layer 114.

The first adhesive layer may have a thickness of 1 µm to 10 µm, preferably2 µm to 8 µm, and more preferably2 µm to 5 µm. In a case in which the thickness of the first adhesive layer satisfies the above numerical range, while sufficient adhesion between the first base material layer 112 and the second base material layer 114 is ensured, the decrease in the energy density to volume of the secondary battery due to the excessive increase in thickness of the pouch film laminate may be prevented.

### 4) Second Adhesive Layer

The second adhesive layer (not shown) may be a layer disposed between the second base material layer 114and the gas barrier layer 120.In this case, the second adhesive layer may act to adhere the second base material layer 114and the gas barrier layer 120 to each other.

The second adhesive layer may include at least one selected from the group consisting of a urethane-based polymer, an epoxy-based polymer, and an acrylic-based polymer, but is not limited thereto. Preferably, the second adhesive layer may include a urethane-based polymer, and, in this case, the second adhesive layer may be easily formed and cut while it may adhere to the second base material layer 114and the gas barrier layer 120.

The second adhesive layer may have a thickness of 1 µm to 10 µm, preferably 2 µm to 8 µm, and more preferably 2 µm to 5 µm. In a case in which the thickness of the second adhesive layer satisfies the above numerical range, while sufficient adhesion between the second base material layer 114and the gas barrier layer 120 is ensured, the decrease in the energy density to volume of the secondary battery due to the excessive increase in thickness of the pouch film laminate may be prevented.

### (2) Gas Barrier Layer

The gas barrier layer 120 is laminated between the base material layer 110 and a sealant layer 130 to secure mechanical strength of the pouch, block incoming and outgoing of gas or moisture from the outside of the secondary battery, and prevent leakage of an electrolyte from the inside of the pouch type battery case.

The gas barrier layer 120may be formed of metal. For example, the gas barrier layer may be a metal thin film including at least one metal selected from the group consisting of aluminum (Al), copper (Cu), stainless steel (SUS), nickel (Ni), titanium (Ti), and INVAR, but is not limited thereto.

According to an embodiment of the present invention, the gas barrier layer 120 may be formed of an aluminum alloy thin film. In a case in which the gas barrier layer 120is formed by using the aluminum alloy thin film, the gas barrier layer 120 is light-weighted while securing more than a predetermined level of mechanical strength, may compensate for electrochemical properties by the electrode assembly and the electrolyte, and may secure a heat dissipation property. An element other than aluminum (Al) may be included in the aluminum alloy thin film. For example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

In another example, the gas barrier layer 120 may be formed of a stainless steel thin film. Specifically, the gas barrier layer 120 may be prepared by forming and/or processing the stainless steel thin film. Since the gas barrier layer 120 formed of stainless steel has relatively low thermal conductivity, it is effective in preventing or delaying heat diffusion to other cells during thermal runaway, and, since it has relatively high toughness, it may suppress generation of cracks in the pouch during use of a pouch type battery. An element other than iron(Fe), for example, at least one selected from the group consisting of copper (Cu), chromium (Cr), manganese (Mn), nickel (Ni), magnesium (Mg), silicon (Si), and zinc (Zn) may be included in the stainless steel.

The gas barrier layer120 may have a thickness of 20 µm to 100 µm, preferably30 µm to 90 µm, and more preferably35 µm to 85 µm. In a case in which the above range is satisfied, since the present invention does not cause a problem of the deformation of the base material layer even if the sealing temperature is increased so that heat may be transferred to the sealant layer, gas barrier performance and formability may be improved when forming a cup portion by using the gas barrier layer thicker than a conventional gas barrier layer.

### (3) Sealant Layer

The sealant layer 130 is for completely sealing the inside of the pouch type battery case by being thermally bonded to each other at a sealing portion when the pouch type battery case accommodating the electrode assembly inside is sealed. For this purpose, the sealant layer 130 may be formed of a material having excellent thermal adhesive strength.

The sealant layer 130 may be formed of a material having insulation properties, corrosion resistance, and sealing properties. Specifically, since the sealant layer 130 is in direct contact with the electrode assembly and/or the electrolyte inside the pouch type battery case, it may be formed of a material having insulation properties and corrosion resistance. Also, since the sealant layer 130 completely seals the inside of the pouch type battery case to block material movement between the inside/the outside, it may be formed of a material having high sealing properties (e.g., excellent thermal adhesive strength) .To ensure such insulation properties, corrosion resistance, and sealing properties, the sealant layer 130 may be formed of a polymer material.

The sealant layer 130may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylenebenzobisoxazole, polyarylate, and Teflon, and may preferably be formed of a polyolefin-based resin such as polypropylene (PP) and/or polyethylene (PE).In this case, the polypropylene (PP) may be composed of cast polypropylene (CPP),acid modified polypropylene (PPa),a polypropyleneethylene copolymer, and/or a polypropylene-butylene-ethylene terpolymer.

The sealant layer 130may have a thickness of 30 µm to 130 µm, preferably40 µm to 120 µm, and more preferably60 µm to 100 µm. In a case in which the thickness of the sealant layer satisfies the above range, there is an effect of securing formability of the pouch film laminate while securing sealing strength of the sealing portion.

The sealant layer 130according to the present invention may have a composite layer structure which is formed by layering two or more materials, respectively. For example, the sealant layer 130may have a multilayer structure. An adhesive layer and/or a skin layer may be disposed between the respective layers of the sealant layer 130 having the composite layer structure. Since the adhesive layer and/or skin layer have thermal adhesiveness, the adhesive layer and/or skin layer may play a role in helping adhesion between the respective layers of the sealant layer 130.For example, the adhesive layer and/or skin layer may include a polypropylenebased resin, but are not limited thereto. Also, the adhesive layer and/or skin layer may be disposed between the sealant layer 130 and the gas barrier layer 120.

Specifically, the sealant layer 130 according to the present invention may include a first sealant layer 132 and a second sealant layer 134. For example, the sealant layer 130 may be composed of the first sealant layer 132 and the second sealant layer 134.As another example, the sealant layer 130 may further include a third sealant layer and/or a fourth sealant layer in addition to the first sealant layer 132 and the second sealant layer 134. The respectively layers of the sealant layer 130 including the first sealant layer 132 and the second sealant layer 134may be formed of materials with different materials and/or physical properties, respectively. An interface may exist between the respectively layers included in the sealant layer 130.This means that the respective layers are different layers from each other and may be formed separately.

The pouch film laminate of the present invention as described above may be prepared by a method of preparing a pouch film laminate which is known in the art. For example, the pouch film laminate of the present invention may be prepared by a method of attaching a base material layer 10 to an upper surface of a gas barrier layer 20 using an adhesive, and forming a sealant layer 30 on a lower surface of the gas barrier layer 20 by co-extrusion or an adhesive layer, and may be prepared by a method such as dry lamination and sandwich lamination. However, the method of preparing a pouch film laminate is not limited thereto.

The pouch film laminate according to the present invention may have a total thickness of 120 µm to 250 µm, preferably 140 µm to 230 µm, and more preferably 150 µm to 215 µm. When the thickness of the pouch film laminate satisfies the above range, a forming depth may be increased while minimizing a reduction of sealing durability or a decrease in battery accommodation space due to an increase in the thickness of the pouch film laminate.

### Pouch Type Secondary Battery

Next, a pouch type secondary battery according to the present invention will be described.

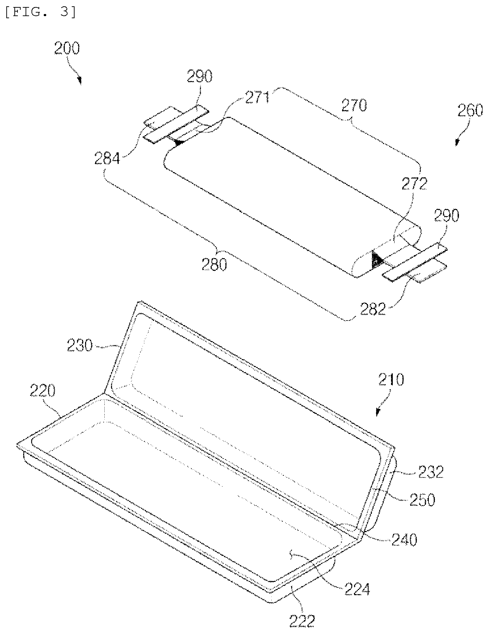

FIG. 3 is an exploded assembly view of a pouch type secondary battery 200 according to the present invention.

As illustrated in FIG. 3, the pouch type secondary battery 200 according to the present invention may include a pouch type battery case 210 prepared by forming the above-described pouch film laminate, and an electrode assembly 260 accommodated in the pouch type battery case 210. Specifically, the pouch type secondary battery 200 of the present invention may include the pouch type battery case 210, the electrode assembly 260, an electrode lead 280, an insulating portion 290, and an electrolyte (not shown).

Hereinafter, each configuration of the pouch type secondary battery of the present invention will be described in more detail with reference to FIG. 3.

### (1) Pouch Type Battery Case

The pouch type battery case 210 may be prepared by forming the above-described pouch film laminate of the present invention. The pouch type battery case 210 may accommodate the electrode assembly 260 inside. Since detailed configuration and physical properties of the pouch film laminate are the same as described above, a detailed description is omitted.

The pouch film laminate may be drawn and stretched by a punch or the like to prepare the pouch type battery case 210.As a result, the pouch type battery case 210 may include a cup portion 222 and an accommodation portion 224.The accommodation portion 224 is a place to accommodate the electrode assembly, wherein it may mean an accommodation space which is formed in a pocket shape inside the cup portion 222 as the cup portion 222 is formed.

According to an embodiment of the present invention, the pouch type battery case 210 may include a first case 220 and a second case 230 as illustrated in FIG. 3. The first case 220 includes the accommodation portion 224 capable of accommodating the electrode assembly 260, and the second case 230 may cover the accommodation portion 224 from the top so that the electrode assembly 260is not separated to the outside of the battery case 210. The first case 220 and the second case 230 may be prepared by connecting one sides thereof to each other as illustrated in FIG. 3, but the present invention is not limited thereto and the first case 220 and the second case 230 may be prepared in various ways, for example, the first case 220 and the second case 230 are separated from each other and prepared separately.

According to another embodiment of the present invention, in a case in which the cup portion is formed on the pouch film laminate, the two symmetrical cup portions 222 and 232 may be drawn adjacent to each other on one pouch film laminate. In this case, as illustrated in FIG. 3, the cup portions 222 and 232 may be formed in the first case 220 and the second case 230, respectively. After the electrode assembly 260 is accommodated in the accommodation portion224 provided in the cup portion 222 of the first case 220, a bridge portion 240 formed between the two cup portions 222 and 232 may be folded so that the two cup portions 222 and 232 face each other. In this case, the cup portion 232 of the second case 230 may accommodate the electrode assembly 260 from above. Thus, since the two cup portions 222 and 232 accommodate the one electrode assembly 260, the electrode assembly 260 having a thickness greater than that when the cup portion 222 is one may be accommodated. Also, since one edge of the secondary battery 200 is formed by folding the pouch type battery case 210, the number of edges to be sealed may be reduced when a sealing process is performed later. Accordingly, a process speed of the pouch type secondary battery 200may be improved, and the number of sealing processes may be reduced.

The pouch type battery case 210 may be sealed in a state in which it accommodates the electrode assembly 260 so that a portion of an electrode lead 280 to be described later, that is, a terminal portion, is exposed. Specifically, when the electrode lead 280 is connected to an electrode tab 270 of the electrode assembly 260 and the insulating portion 290 is formed in the portion of the electrode lead 280, the electrode assembly 260 is accommodated in the accommodation portion 224 provided in the cup portion 222 of the first case 220, and the second case 230 may cover the accommodation portion 224 from the top. Subsequently, an electrolyte is injected in the accommodation portion 224 and a sealing portion250 formed on edges of the first case 220 and the second case 230may be sealed.

The sealing portion 250 may act to seal the accommodation portion 224. Specifically, the sealing portion 250 may seal the accommodation portion 224 while being formed along an edge of the accommodation portion 224. Temperature at which the sealing portion 250 is sealed may be in a range of 180°C to 250°C, particularly 200°C to 250°C, and more particularly 210°C to 240°C. In a case in which the sealing temperature satisfies the above numerical range, the pouch type battery case 210 may secure sufficient sealing strength by thermal bonding.

### (2) Electrode Assembly

The electrode assembly 260 may be inserted into the pouch type battery case 210 and may be sealed by the pouch type battery case 210 after the injection of the electrolyte.

The electrode assembly 260 may be formed by sequentially stacking a positive electrode, a separator, and a negative electrode. Specifically, the electrode assembly 260 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 260 may be prepared in a predetermined shape by stacking the positive electrode and the negative electrode on both sides of the separator. Types of the electrode assembly 260 may include a stacked type, a jelly-roll-type, and a stack and folding type, but are not limited thereto.

The electrode assembly 260 may include the electrode tab 270.

The electrode tab 270 is connected to each of the positive electrode and the negative electrode of the electrode assembly 260 and protrudes from the electrode assembly 260 to the outside so that it may be a path through which electrons may move between the inside and the outside of the electrode assembly 260.The electrode current collector included in the electrode assembly 260 may be composed of a portion to which the electrode active material is applied and an end portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 3, the electrode tabs 270 may protrude in different directions of the electrode assembly 260, respectively, but are not limited thereto and may be formed to protrude in various directions, for example, the electrode tabs 270 protrude side by side from one side of the electrode assembly 260 in the same direction.

### (3) Electrode Lead

The electrode lead 280 may supply electricity to the outside of the secondary battery 200.The electrode lead 280 may be connected to the electrode tab 270 of the electrode assembly 260 by spot welding or the like.

The electrode lead 280 is connected to the electrode assembly 260 and may protrude to the outside of the pouch type battery case 210 via the sealing portion 250.Specifically, one end of the electrode lead 280 is connected to the electrode assembly 260, especially the electrode tab 270, and the other end of the electrode lead 280 may protrude to the outside of the pouch type battery case 210.

The electrode lead 280 may include a positive electrode lead 282, which has one end connected to a positive electrode tab 272 and extends in a protruding direction of the positive electrode tab 272, and a negative electrode lead 284 which has one end connected to a negative electrode tab 271 and extends in a protruding direction of the negative electrode tab 271. The other ends of both of the positive electrode lead 282 and the negative electrode lead 284 may protrude to the outside of the battery case 210.Accordingly, the electricity generated inside the electrode assembly 260 may be supplied to the outside. Also, since the positive electrode tab 272 and the negative electrode tab 271 are formed to respectively protrude in various directions, the positive electrode lead 282 and the negative electrode lead 284 may also respectively extend in various directions. Materials of the positive electrode lead 282 and the negative electrode lead 284 may be different from each other. That is, the positive electrode lead 282 may be formed of an aluminum (Al) material that is the same as the positive electrode collector, and the negative electrode lead 284 may be formed of a copper (Cu) material or nickel (Ni)-coated copper material that is the same as the negative electrode collector. Since a portion of the electrode lead 280 protruding to the outside of the battery case 210 becomes a terminal portion, it may be electrically connected to an external terminal.

### (4) Insulating Portion

The insulating portion 290 prevents flow of the electricity generated from the electrode assembly 260 to the battery case 210 through the electrode lead 280, and may maintain sealing of the battery case 210.For this purpose, the insulating portion 290 may be formed of an insulator having non-conductivity which does not conduct electricity well. In general, as the insulating portion 290, an insulating tape or film, which is easy to be attached to the electrode lead 280 and is relatively thin, is widely used, but the present invention is not limited thereto and any member capable of insulating the electrode lead 280 may be used.

The insulating portion 290 may be disposed to surround an outer circumferential surface of the electrode lead 280. Specifically, at least a portion of the electrode lead 280 may be surrounded by the insulating portion 290. In this case, the insulating portion 290 may be disposed between the electrode lead 280 and the pouch type battery case 210. The insulating portion 290 may be limitedly located at the sealing portion 250 to which the first case 220 and the second case 230 of the pouch type battery case 210 are thermally fused, and may adhere the electrode lead 280 to the battery case 210.

### (5) Electrolyte

The pouch type secondary battery 200 according to the present invention may further include an electrolyte (not shown) that is injected into the pouch type battery case 210.The electrolyte is for moving lithium ions that are generated by an electrochemical reaction of the electrode during charge/discharge of the secondary battery 200, wherein it may include a non-aqueous organic electrolyte solution, as a mixture of a lithium salt and organic solvents, or a polymer using a polymer electrolyte. Furthermore, the electrolyte may include a sulfide-based, oxide-based, or polymer-based solid electrolyte, and the solid electrolyte may have flexibility to be easily deformed by an external force.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Example 1

A base material layer was formed by sequentially laminating 25um thick Nylon 6 film A having thermal properties as shown in Table 1 below, a 12um thick second adhesive film, and a 12um thick polyethylene terephthalate (PET) film on one surface of a 60um thick aluminum (Al) alloy thin film by a dry lamination method using a urethane adhesive. In this case, the urethane adhesive was applied such that a thickness of an adhesive layer was 3um. Next, a pouch film laminate was prepared by co-extruding a 40 µm thick acid modified polypropylene (PPa) film and a 40 µm thick polypropylene (PP) film on the other surface of the aluminum alloy thin film to form an 80 µm thick sealant layer.

### Example 2

A base material layer was formed by sequentially laminating 25um thick Nylon 6 film B having thermal properties as shown in Table 1 below, a 12um thick second adhesive film, and a 12um thick polyethylene terephthalate (PET) film on one surface of a 60um thick aluminum (Al) alloy thin film by a dry lamination method using a urethane adhesive. In this case, the urethane adhesive was applied such that a thickness of an adhesive layer was 3um.Next, a pouch film laminate was prepared by co-extruding a 30 µm thick acid modified polypropylene (PPa) film, a 30 µm thick cast polypropylene (CPP) film, and a 20 µm thick polypropylene (PP) film on the other surface of the aluminum alloy thin film to form an 80 µm thick sealant layer.

### Comparative Example 1

A base material layer was formed by sequentially laminating25µm thick Nylon 6 film C having thermal properties as shown in Table 1 below, a 12um thick second adhesive film, and a 12um thick polyethylene terephthalate (PET) film on one surface of a 60um thick aluminum (Al) alloy thin film by a dry lamination method using a urethane adhesive. In this case, the urethane adhesive was applied such that a thickness of an adhesive layer was 3um.Next, a pouch film laminate was prepared by co-extruding a 30 µm thick acid modified polypropylene (PPa) film and a 50 µm thick cast polypropylene (CPP) film on the other surface of the aluminum alloy thin film to form an 80 µm thick sealant layer.

### Comparative Example 2

A base material layer was formed by sequentially laminating 25um thick Nylon 6 film D having thermal properties as shown in Table 1 below, a 12um thick second adhesive film, and a 12um thick polyethylene terephthalate (PET) film on one surface of a 60um thick aluminum (Al) alloy thin film by a dry lamination method using a urethane adhesive. In this case, the urethane adhesive was applied such that a thickness of an adhesive layer was 3um.Next, a pouch film laminate was prepared by co-extruding a 30 µm thick polypropylene (PP) film and a 50 µm thick polypropylene film on the other surface of the aluminum alloy thin film to form an 80 µm thick sealant layer.

### Comparative Example 3

A base material layer was formed by sequentially laminating 15um thick Nylon 6 film E having thermal properties as shown in Table 1 below, a 12um thick second adhesive film, and a 12um thick polyethylene terephthalate (PET) film on one surface of a 40um thick aluminum (Al) alloy thin film by a dry lamination method using a urethane adhesive. In this case, the urethane adhesive was applied such that a thickness of an adhesive layer was 3um. Next, a pouch film laminate was prepared by co-extruding an80 µm thick cast polypropylene (CPP) film on the other surface of the aluminum alloy thin film to form an 80 µm thick sealant layer.

### Comparative Example 4

A base material layer was formed by sequentially laminating 15um thick Nylon 6 film F having thermal properties as shown in Table 1 below, a 12um thick second adhesive film, and a 12um thick polyethylene terephthalate (PET) film on one surface of a 40um thick aluminum (Al) alloy thin film by a dry lamination method using a urethane adhesive. In this case, the urethane adhesive was applied such that a thickness of an adhesive layer was 3um. Next, a pouch film laminate was prepared by co-extruding an 80 µm thick cast polypropylene (CPP) film on the other surface of the aluminum alloy thin film to form an 80 µm thick sealant layer.

### Experimental Example 1 - Measurement of Thermal Properties of Nylon Films

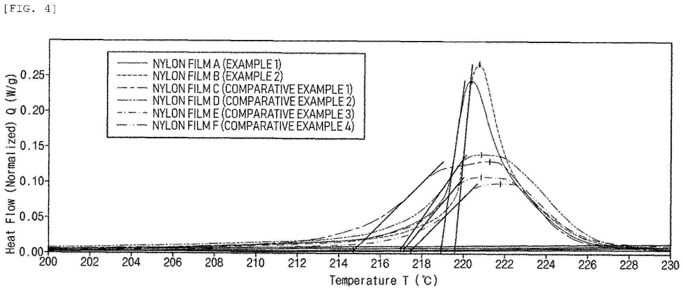

The pouch film laminates of Examples 1 and 2 and Comparative Examples 1 to 4 prepared as described above each were loaded into a differential scanning calorimetry (DSC, TA Instruments, DSC250) instrument and heated to 280°C at a heating rate of 10°C/min to confirm thermal properties of the pouch film laminates. In this case, thermal properties of the Nylon 6 films respectively included in Examples 1 and 2 and Comparative Examples 1 to 4 were measured through melting peaks of the Nylon 6 films which appeared in a temperature range of the DSC instrument of 200°C to 230°C.The results thereof are presented in [Table 1] and FIG. 4 below.

**[Table 1]**

| | Nylon 6 film type | Melting peak height (H) [W/g] | Melting enthal py (A) [W·sec /g] | Melting peak height (H)/ Meltin g enthal py (A) [se c⁻¹] | Full width at half maximu m (FWHM) [°C] | Ratio (Y/X) of area (Y) of the melting peak in a range of 210°C to 220°C to total area (X) of the melting peak |
|---|---|---|---|---|---|---|
| Example 1 | Nylon film A | 0.235 | 6.294 | 0.037 | 2.7 | 0.32 |
| Example 2 | Nylon film B | 0.262 | 6.104 | 0.043 | 2.2 | 0.24 |
| Comparative Example 1 | Nylon film C | 0.119 | 6.316 | 0.019 | 7.3 | 0.33 |
| Comparative Example 2 | Nylon film D | 0.130 | 6.108 | 0.021 | 6.3 | 0.46 |
| Comparative Example 3 | Nylon film E | 0.097 | 4.209 | 0.023 | 6.3 | 0.35 |
| Comparative Example 4 | Nylon film F | 0.094 | 3.661 | 0.026 | 5.8 | 0.29 |

Referring to Table 1, it may be confirmed that the Nylon films A and B respectively included in Examples 1 and 2 had a ratio (H/A) of the height (W/g) (H) of the peak to the melting enthalpy (W·sec/g) (A) of 0.03 sec⁻¹ or more, and the Nylon films C, D, E and F respectively included in Comparative Examples 1 to 4 had a ratio (H/A) of the height (W/g) (H) of the peak to the melting enthalpy (W·sec/g)(A) of less than 0.03 sec⁻¹.Referring to Table 1, it may be confirmed that the Nylon film A included in Example 1 had a smaller ratio (Y/X) of the area (Y) of the melting peak in a range of 210°C to 220°C to the total area (X) of the melting peak than the Nylon films C, D, and E respectively included in Comparative Examples 1 to 3, but had a larger ratio (Y/X) of the area (Y) of the melting peak in a range of 210°C to 220°C to the total area (X) of the melting peak than the Nylon film F included in Comparative Example 4.That is, it may be understood that the ratio (H/A) of the height (W/g) (H) of the peak to the melting enthalpy (W·sec/g) (A) according to the present invention had an independent relationship with the ratio (Y/X) of the area (Y) of the melting peak in a range of 210°C to 220°C to the total area (X) of the melting peak.

### Experimental Example 2-Whether or Not Appearance of Sealing Portion Was Deformed

A water content per unit weight of the pouch film laminate was changed by adjusting an amount of moisture in a chamber in which each of the pouch film laminates prepared in Examples 1 and 2 and Comparative Examples 1 to 4 was stored. Thereafter, five of each of the pouch film laminates having a relative water content index of the second base material layer according to the following Equation 1 of 6,000ppm·g/cm², 9,000 ppm·g/cm², 11,500 ppm·g/cm², and 14,000 ppm·g/cm² were prepared for Examples 1 and 2 and Comparative Examples 1 to 4. Relative water content index = [(pouch water content) × (pouch density)] × [(second base material layer thickness)/(total thickness of the pouch film laminate)]

Thereafter, after each pouch film laminate was cut to a size of 266mm in width and 200mm in length and then folded in half to a size of 133mm in width and 200mm in length such that the sealant layers were in contact with each other, each pouch type battery case was prepared by sealing an end of a long side (200 mm) under the following conditions.
- sealing conditions: sealing for 1.6 seconds at a seal bar area of 200 mm × 8 mm and 220°C.

Next, for each of the pouch type battery cases sealed, whether or not a sealing portion was deformed due to bubbles generated in the second base material layer, which was located in the sealing portion, was visually checked. The results thereof are presented in Table 2 below.
∘: the sealing portion was deformed due to the generation of bubbles
×: no bubbles were generated and the sealing portion was not deformed

**[Table 2]**

| | Whether or not appearance was deformed according to the relative water content index | | | |
|---|---|---|---|---|
| Relative water content index (ppm·g/cm²) | 6, 000 | 9, 000 | 11,500 | 14,000 |
| Example 1 | × | × | × | × |
| Example 2 | × | × | × | × |
| Comparative Example 1 | × | × | ○ | ○ |
| Comparative Example 2 | × | × | ○ | ○ |
| Comparative Example 3 | × | ○ | ○ | ○ |
| Comparative Example 4 | × | ○ | ○ | ○ |

According to Table 2, with respect to Examples 1 and 2 in which the ratio of the height of the melting peak to the melting enthalpy of the polyamide-based film was 0.03 sec⁻¹ or more, unlike Comparative Examples 1 to 4, since no bubbles were generated in the second base material layer even when the relative water content index was 11,500 ppm·g/cm² or more when sealing was performed at a temperature of 220°C, it may be confirmed that deformation in appearance of the sealing portion did not occur.

### (Description of the Symbols)

100: Pouch Film Laminate
110: Base Material Layer
112:First Base Material Layer
114:Second Base Material Layer
120: Gas Barrier Layer
130: Sealant Layer
200: Pouch Type Secondary Battery
210: Pouch Type Case
220: First Case
222: Cup Portion
224: Accommodation Portion
230: Second Case
232: Cup Portion
240: Bridge Portion
250: Sealing Portion
260: Electrode Assembly
270: Electrode Tab
272: Positive Electrode Tab
274: Negative Electrode Tab
280: Electrode Lead
282: Positive Electrode Lead
284: Negative Electrode Lead
290: Insulating Portion

## Claims

1. A pouch film laminate in which a base material layer; a gas barrier layer; and a sealant layer are sequentially laminated,
wherein the base material layer comprises a polyamide-based film, and
in a melting peak of the polyamide-based film which is obtained by differential scanning calorimetry (DSC), a ratio (H/A) of a height (W/g) (H) of the peak to a melting enthalpy (W·sec/g) (A) of the polyamide-based film is 0.03 sec⁻¹ or more.

2. The pouch film laminate of claim 1, wherein a full width at half maximum value of the melting peak of the polyamide-based film is 5.0°C or less.

3. The pouch film laminate of claim 1, wherein a lower limit of a relative water content index represented by Equation 1 of the polyamide-based film is 11,500 ppm·g/cm². Relative water content index (ppm·g/cm2) = [(pouch water content) × (pouch density)] × [(second base material layer thickness)/(total thickness of the pouch film laminate)]

4. The pouch film laminate of claim 1, wherein the polyamide-based film comprises at least one selected from the group consisting of Nylon 6, Nylon 6,6, Nylon MXD5(polyxylylene adipamide), Nylon 4, Nylon 4,6, and Nylon 4,10.

5. The pouch film laminate of claim 1, wherein the base material layer has a two-layer structure in which a first base material layer and a second base material layer are sequentially laminated, and the second base material layer comprises the polyamide-based film.

6. The pouch film laminate of claim 5, wherein the second base material layer has a thickness of 5 µm to 30 µm.

7. The pouch film laminate of claim 5, wherein the first base material layer has a thickness of 5 µm to 30 µm.

8. The pouch film laminate of claim 5, wherein the first base material layer comprises a polyester-based film.

9. The pouch film laminate of claim 1, wherein the gas barrier layer comprises at least one selected from the group consisting of aluminum, copper, and stainless steel.

10. The pouch film laminate of claim 1, wherein the gas barrier layer has a thickness of 20 µm to 100 µm.

11. The pouch film laminate of claim 1, wherein the sealant layer has a thickness of 30 µm to 130 µm.

12. A pouch type secondary battery comprising:
a pouch type battery case prepared by forming the pouch film laminate of any one of claims 1 to 11; and
an electrode assembly accommodated in the pouch type battery case.
